(19) Europäisches Patentamt
European Patent Office
Office européen des brevets

(11) Veröffentlichungsnummer: **0 377 428 B1**

(12) **EUROPÄISCHE PATENTSCHRIFT**

(45) Veröffentlichungstag der Patentschrift: **15.02.95**

(51) Int. Cl.[6]: **C08K 13/02**, C08L 27/06, //(C08K13/02,3:34,5:3477)

(21) Anmeldenummer: **89890316.6**

(22) Anmeldetag: **13.12.89**

# (54) Verarbeitungszusatz für halogenhaltige Polymere.

(30) Priorität: **19.12.88 AR 308888**

(43) Veröffentlichungstag der Anmeldung:
**11.07.90 Patentblatt 90/28**

(45) Bekanntmachung des Hinweises auf die Patenterteilung:
**15.02.95 Patentblatt 95/07**

(84) Benannte Vertragsstaaten:
**BE CH DE ES FR GB IT LI NL SE**

(56) Entgegenhaltungen:
**EP-A- 0 027 588**
**DE-A- 2 233 743**

**CHEMICAL ABSTRACTS, Band 100, Nr. 2, 9. Januar 1984, Seite 47, Zusammenfassung Nr. 7853x, Columbus, Ohio, US; & JP-A-58 122 951**

**CHEMICAL ABSTRACTS, Band 110, Nr. 18, 1. Mai 1989, Seiten 168-169, Zusammenfassung Nr. 157134j, Columbus, Ohio, US; & JP-A-63 315 513**

**DATABASE WPI, Nr. 78-59308A, Derwent Publications Ltd, London, GB; & JP-A-53 078 250**

(73) Patentinhaber: **CHEMSON POLYMER-ADDITIVE GESELLSCHAFT M.B.H.**

**A-9601 Arnoldstein (AT)**

(72) Erfinder: **Meszaros, Peter, Dr.**
**Jungnickelstrasse 5/2/4**
**A-9500 Villach (AT)**
Erfinder: **Stern, Peter**
**Gailitz 165**
**F-9601 Arnoldstein (AT)**

(74) Vertreter: **Collin, Hans, Dipl.-Ing. Dr. et al**
**Patentanwälte**
**Dipl.-Ing. Dr. Hans Collin**
**Dipl.-Ing. Erwin Buresch**
**Dipl.-Ing.Armin Häupl**
**Mariahilferstrasse 50**
**A-1070 Wien (AT)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft einen Verarbeitungszusatz für halogenhaltige Polymere, insbesondere PVC, mit einem Gehalt an einem synthetischen, kristallinen, 13 bis 25 Gew.-% gebundenes Wasser enthaltenden feinteiligen Alkalialumosilikat, das - bezogen auf die wasserfreie Form - die Zusammensetzung (0,7 bis 1,1 $Me_2O$).$Al_2O_3$.(1,3 bis 2,4 $SiO_2$) hat, wobei Me für ein Alkalimetall steht.

Mit anderen Worten betrifft die Erfindung die Stabilisierung von halogenhaltigen Polymeren, wobei dieser Begriff Homopolymerisate oder Copolymerisate von Vinylchlorid sowie Abmischungen solcher Polymerisate mit anderen Polymermassen erfaßt. Wenn es nicht erwünscht ist, für die Stabilisierung Blei-, Zinn- oder Barium-/Cadmium-Verbindungen einzusetzen, so verwendet man an ihrer Stelle Seifen von Alkali- und/oder Erdalkalimetallen bzw. Zink in Kombination mit verschiedenen Costabilisatoren. Als Costabilisator wurde unter anderen auch synthetisches, kristallines, 13 - 25 Gew.-% gebundenes Wasser enthaltendes feinteiliges Alkalialumosilikat (Zeolith), das - bezogen auf die wasserfreie Form - die Zusammensetzung (0,7 bis 1,1 $Me_2O$).$Al_2O_3$. (1,3 bis 2,4 $SiO_2$) hat, wobei Me für ein Alkalimetall steht, vorgeschlagen. In weiterer Folge wird diese Substanz einfachheitshalber nur Alkalialumosilikat genannt. Dieses Alkalialumosilikat wird besonders vorteilhaft in Kombination mit bestimmten weiteren Costabilisatoren eingesetzt, wie die DE-OSen 2 941 596, 3 113 442, 3 247 737 und 3 332 003 lehren.

Es wurde nun überraschenderweise gefunden, daß die Kombination von Alkalialumosilikaten mit bestimmten Isocyanursäurederivaten die Farbe und die Thermostabilität von halogenhaltigen Polymeren in nicht vorhersehbarer Weise verbessert. Dementsprechend ist ein erfindungsgemäßer Verarbeitungszusatz vor allem dadurch gekennzeichnet, daß das Alkalialumosilikat in Kombination mit mindestens einem Isocyanursäurederivat der Formel

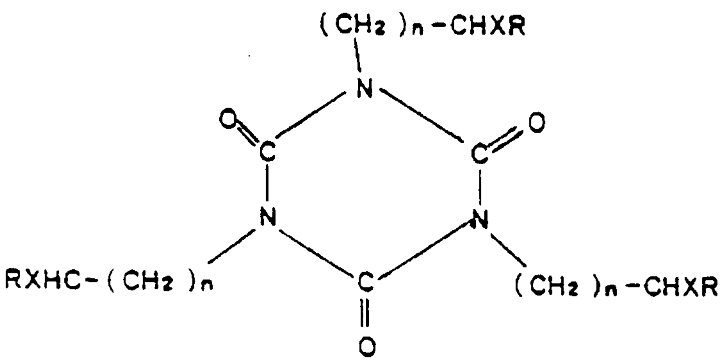

I

in der die n jeweils für eine ganze Zahl von 0 bis 5, vorzugsweise von 0 bis 3 stehen, die X jeweils für H oder für eine geradkettige oder verzweigte Alkylgruppe mit 1 bis 6 C-Atomen, vorzugsweise mit 1 oder 2 C-Atomen stehen und die R jeweils für OH oder COOH stehen, und in der die n, X und/oder R vorzugsweise die gleiche Bedeutung aufweisen, vorliegt. Bevorzugt sind dabei Isocyanursäurederivate der Formel I, in denen die X für H stehen. Besonders bevorzugte Isocyanursäurederivate sind das Tris-(2-hydroxyethyl)-isocyanurat (THEIC) und das Tris-(2-carboxyethyl)-isocyanurat (TCEIC). THEIC ist zwar in Zusammenhang mit der Stabilisierung von PVC bereits vorgeschlagen worden, siehe z.B. die GB-PSen 2 037 777 und 2 037 778 sowie die JP-PS 7 805 057; die besonders vorteilhafte Kombination mit Alkalialumosilikaten wurde jedoch nirgends erwähnt und lag auch nicht nahe. Die erfindungsgemäß in Kombination mit einem Alkalialumosilikat eingesetzten Isocyanursäurederivat sind bekannte Verbindungen bzw. lassen sich nach bekannten Verfahren herstellen.

Es ist weiterhin erfindungsgemäß bevorzugt, daß das Alkalialumosilikat und das Isocyanursäurederivat zusammen mit Seifen von Alkali und/oder Erdalkali- und Zinkseifen als Primärstabilisatoren eingesetzt sind. Die erfindungsgemäße Kombination Alkalialumosilikat/Isocyanursäurederivat kann weiterhin zusammen mit üblichen Gleitmitteln, Stabilisatoren mit Gleitwirkung, weiteren Costabilisatoren und sonst üblichen Zusätzen wie Antioxidantien, Zusatzstoffen zur Verbesserung der Schlagfestigkeit, Epoxiden, Weichmachern, Pigmenten und/oder Füllstoffen eingesetzt sein. Als Gleitmittel kommen in Frage Metallseifen (wie Calciumstearat oder andere Salze langkettiger aliphatischer Carbonsäuren), Wachse, langkettige Alkohole, Paraffine, Fettsäuren, Fettsäureester (z.B.: Ester oder Partialester von Polyolen wie Glykole, Glycerin, Pentaerythrit oder Zuckeralkohole mit Fettsäuren mit 8 bis 22 C-Atomen) oder Fettsäureamide. Die erfindungsgemäße Kombination kann weiterhin vorteilhaft zusammen mit epoxidierten Estern von ungesättigten Fettsäuren, wie epoxidiertem Sojaöl, eingesetzt werden. Von den Antioxidantien haben sterisch gehinderte Phenole wie z.B.

2,6-Di-tertiärbutyl-4-methylphenol (BHT) eine besonders vorteilhafte Wirkung.

Der erfindungsgemäße Verarbeitungszusatz kann in üblicher Weise formuliert werden, u.a. als Pulver; bevorzugt ist die Form eines Granulates, insbesondere eines Kompaktgranulats, Aufbaugranulats oder über eine plastische oder flüssige Phase erhaltenen Granulats.

Die Erfindung betrifft weiterhin mit der erfindungsgemäßen Kombination stabilisierte halogenhaltige Polymere, insbesondere PVC-Massen wie PVC-Homo- oder Mischpolymerisate, die in beliebiger Weise hergestellt worden sind.

Vorzugsweise enthalten die Polymere das Alkalialumosilikat in Anteilen von 0,2 bis 5 Gew.-% und das Isocyanursäurederivat in Anteilen von 0,1 bis 5 Gew.-%.

Die Erfindung wird nachfolgend anhand von Ausführungsbeispielen näher beschrieben.

Beispiel 1

100 Gewichtsteile Suspensions-PVC (K-Wert 68) werden mit folgenden Komponenten vermischt:
0,7 Gewichtsteile (GT) Calciumlaurat
0,6 Gewichtsteile (GT) Zinklaurat
0,5 Gewichtsteile (GT) Syntheseparaffin (Fischer-Tropsch-Paraffin)
Dazu kommen weitere Komponenten entsprechend Tabelle 1.

Tabelle 1

| Ansatz Nr. | GT | Substanz | Zuordnung |
|---|---|---|---|
| 1 | 1,0 | Alkalialumosilikat | Vergleichsbeispiel |
| 2 | 1,0<br>0,2 | Alkalialumosilikat<br>Stearoylbenzoylmethan | Vergleichsbeispiel |
| 3 | 0,9<br>0,2<br>0,1 | Alkalialumosilikat<br>Stearoylbenzoylmethan<br>BHT | Vergleichsbeispiel |
| 4 | 1,0<br>0,4 | Alkalialumosilikat<br>THEIC | Erfindungsgemäß |
| 5 | 1,0<br>0,4<br>0,1 | ALkalialumosilikat<br>THEIC<br>BHT | Erfindungsgemäß |
| 6 | 0,9<br>0,7 | Alkalialumosilikat<br>THEIC | Erfindungsgemäß |
| 7 | 0,9<br>0,7<br>0,1 | Alkalialumosilikat<br>THEIC<br>BHT | Erfindungsgemäß |
| 8 | 0,9<br>0,7<br>0,1<br>3,0 | Alkalialumosilikat<br>THEIC<br>BHT<br>epoxidiertes Sojaöl | Erfindungsgemäß |
| 9 | 0,9<br>0,2<br>0,1 | Alkalialumosilikat<br>TCEIC<br>BHT | Erfindungsgemäß |
| 10 | 2,0<br>0,4 | Alkalialumosilikat<br>THEIC | Erfindungsgemäß |

Die Wirkung der Stabilisatorkombinationen wird an Hand der statischen Thermostabilität von Walzfellen geprüft. Zu diesem Zweck werden die Stabilisatorgemische enthaltende Polyvinylchloridformmassen auf einem Laborwalzwerk der Firma Collin, Walzendurchmesser 200 mm, bei einer Walzentemperatur von 180 °C und einer Walzendrehzahl von 21 bzw. 24 Upm im Verlauf von 5 Minuten zu Prüffellen verarbeitet.

Die ca. 0,3 mm dicken Felle werden zu Streifen von ca. 15 mm Breite geschnitten und in einem Mathis-Laborthermotester,Type LTF-ST, geprüft. Beurteilt wurde die Zeit in Minuten bis zur Schwarzfärbung (Stabilitätsabbruch) und der Yellowness-Index nach 0, 5, 10 und alle weiteren 10 Minuten.

Die Ergebnisse sind in Tabelle 2 zusammengefaßt.

Beispiel 2

100 Gewichtsteile Suspensions-PVC (K-Wert 68) werden mit folgenden Komponenten vermischt:
1,0 Gewichtsteile (GT) Calciumstearat
0,8 Gewichtsteile (GT) Zinkstearat
0,5 Gewichtsteile (GT) Syntheseparaffin (Fischer-Tropsch-Paraffin)
Dazu kommen weitere Komponenten entsprechend Tabelle 3.

Tabelle 3

| Ansatz Nr. | GT | Substanz | Zuordnung |
|---|---|---|---|
| 11 | 2,0 | Alkalialumosilikat | Vergleichsbeispiel |
| 12 | 2,0<br>0,2 | Alkalialumosilikat<br>Stearoylbenzoylmethan | Vergleichsbeispiel |
| 13 | 2,0<br>1,0 | Alkalialumosilikat<br>THEIC | Erfindungsgemäß |
| 14 | 1,0<br>1,0 | Alkalialumosilikat<br>THEIC | Erfindungsgemäß |
| 15 | 1,0<br>1,0<br>0,1 | Alkalialumosilikat<br>THEIC<br>BHT | Erfindungsgemäß |

Die Wirkung der Stabilisatorkombination wird wie in Beispiel 1 an Hand der statischen Thermostabilität von Walzfellen geprüft.

Die Ergebnisse sind in Tabelle 4 zusammengefaßt.

**Tabelle 2**

| Ansatz Nr. | Stabilitäts-abbruch nach Minuten | Yellowness-Index nach Minuten | | | | | | | | | | | |
|---|---|---|---|---|---|---|---|---|---|---|---|---|---|
| | | 0 | 5 | 10 | 20 | 30 | 40 | 50 | 60 | 70 | 80 | 90 | 100 |
| 1 | 24 | 41,2 | 44,8 | 61,9 | 70,1 | | | | | | | | |
| 2 | 32 | 17,7 | 19,1 | 22,5 | 26,5 | 47,7 | | | | | | | |
| 3 | 35 | 17,4 | 18,4 | 23,5 | 32,1 | 43,0 | | | | | | | |
| 4 | 67 | 22,5 | 24,7 | 27,7 | 38,5 | 52,7 | 64,9 | 86,8 | 111,3 | | | | |
| 5 | 125 | 18,0 | 17,5 | 19,1 | 23,5 | 36,3 | 54,2 | 70,9 | 79,6 | 84,7 | 93,8 | 99,9 | 109,4 |
| 6 | 83 | 18,3 | 18,8 | 20,1 | 25,2 | 35,1 | 47,9 | 62,9 | 79,2 | 106,5 | - | - | - |
| 7 | 120 | 18,6 | 19,3 | 20,7 | 24,3 | 33,7 | 48,2 | 61,0 | 67,6 | 72,7 | 80,1 | 88,2 | 104,2 |
| 8 | 132 | 14,7 | 19,7 | 20,4 | 23,9 | 33,6 | 48,2 | 53,0 | 60,7 | 63,5 | 65,8 | 70,9 | 73,7 |
| 9 | 118 | 19,1 | 20,0 | 23,5 | 30,5 | 41,2 | 55,1 | 68,0 | 80,8 | 85,7 | 89,4 | 98,8 | 107,7 |
| 10 | 100 | 21,2 | 23,1 | 26,4 | 36,3 | 50,3 | 60,3 | 72,3 | 96,5 | 114,9 | | | |

**Tabelle 4**

| Ansatz Nr. | Stabilitäts-abbruch nach Minuten | Yellowness-Index nach Minuten | | | | | | | | | | | |
|---|---|---|---|---|---|---|---|---|---|---|---|---|---|
| | | 0 | 5 | 10 | 20 | 30 | 40 | 50 | 60 | 70 | 80 | 90 | 100 |
| 11 | 40 | 45,9 | 45,9 | 61,5 | 85,0 | 84,3 | | | | | | | |
| 12 | 38 | 22,7 | 22,8 | 28,5 | 36,8 | 45,2 | | | | | | | |
| 13 | 110 | 18,6 | 18,0 | 19,4 | 23,2 | 32,4 | 46,3 | 60,0 | 82,2 | 101,5 | 117,2 | 130,0 | |
| 14 | 87 | 19,5 | 18,6 | 18,9 | 24,0 | 37,2 | 49,0 | 66,4 | 86,9 | 109,1 | 123,0 | | |
| 15 | 98 | 21,7 | 21,9 | 26,1 | 33,3 | 49,1 | 59,5 | 69,6 | 73,3 | 80,1 | 99,4 | 114,5 | |

## Patentansprüche

1. Verarbeitungszusatz für halogenhaltige Polymere, insbesondere PVC, mit einem Gehalt an einem synthetischen kristallinen, 13 bis 25 Gew.-% gebundenes Wasser enthaltenden feinteiligen Alkalialumosilikat, das - bezogen auf die wasserfreie Form - die Zusammensetzung (0,7 bis 1,1 $Me_2O$).$Al_2O_3$.(1,3 bis 2,4 $SiO_2$) hat, wobei Me für ein Alkalimetall steht, dadurch gekennzeichnet, daß das Alkalialumosilikat in Kombination mit mindestens einem Isocyanursäurederivat der Formel

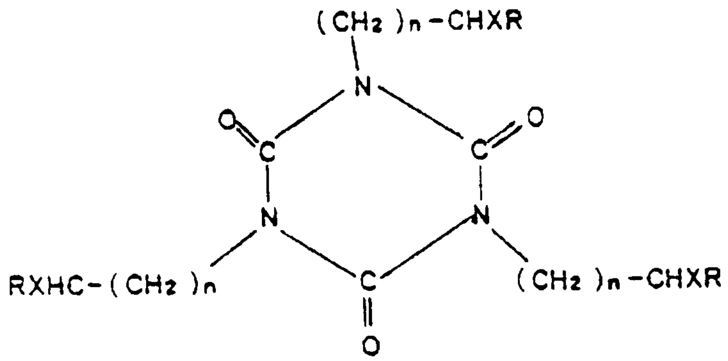

I

in der die n jeweils für eine ganze Zahl von 0 bis 5, vorzugsweise von 0 bis 3 stehen, die X jeweils für H oder für eine geradkettige oder verzweigte Alkylgruppe mit 1 bis 6 C-Atomen, vorzugsweise mit 1 oder 2 C-Atomen stehen und die R jeweils für -OH oder -COOH stehen, und in der die n, X und/oder R vorzugsweise die gleiche Bedeutung aufweisen, vorliegt.

2. Verarbeitungszusatz nach Anspruch 1, dadurch gekennzeichnet, daß das Alkalialumosilikat in Kombination mit einem Isocyanursäurederivat der Formel I vorliegt, in der die X für H stehen.

3. Verarbeitungszusatz nach einem der Ansprüche 1 oder 2, dadurch gekennzeichnet, daß als Isocyanursäurederivat das Tris-(2-hydroxyethyl)-isocyanurat oder das Tris-(2-carboxyethyl)-isocyanurat eingesetzt ist.

4. Verarbeitungszusatz nach einem der Ansprüche 1 bis 3, dadurch gekennzeichnet, daß das Alkalialumosilikat und das Isocyanursäurederivat zusammen mit mindestens einem üblichen Primärstabilisator auf Basis einer Metallseife, insbesondere Verbindungen von Ba, Ca, Mg und/oder Zn, eingesetzt sind, wobei das Barium auch als Alkylphenolat vorliegen kann.

5. Verarbeitungszusatz nach einem der Ansprüche 1 bis 4, dadurch gekennzeichnet, daß das Alkalialumosilikat und das Isocyanursäurederivat zusammen mit üblichen Gleitmitteln eingesetzt sind.

6. Verarbeitungszusatz nach einem der Ansprüche 1 bis 5, dadurch gekennzeichnet, daß das Alkalialumosilikat und das Isocyanursäurederivat zusammen mit epoxidiertem Sojaöl eingesetzt sind.

7. Verarbeitungszusatz nach einem der Ansprüche 1 bis 6, dadurch gekennzeichnet, daß das Alkalialumosilikat und das Isocyanursäurederivat zusammen mit einem sterisch gehinderten Phenol eingesetzt sind.

8. Stabilisierte halogenhaltige Polymere, insbesondere PVC, dadurch gekennzeichnet, daß sie einen Verarbeitungszusatz nach einem der Ansprüche 1 bis 7 enthalten.

9. Polymere nach Anspruch 8, dadurch gekennzeichnet, daß sie das Alkalialumosilikat in Anteilen von 0,2 bis 5 Gew.-% bezogen auf das Polymer, enthalten.

10. Polymere nach Anspruch 8 oder 9, dadurch gekennzeichnet, daß sie das Isocyanursäurederivat in Anteilen von 0,1 bis 5 Gew.-% bezogen auf das Polymer, enthalten.

## Claims

1. A processing additive for halogen-containing polymers, particularly PVC, having a content of synthetic, crystalline, finely-particulate alkali metal aluminosilicate containing 13 to 15 percent by weight of bound water, having in its anhydrous form the composition (0.7 to 1.1 $Me_2O$).$Al_2O_3$x(1.3 to 2.4 $SiO_2$) based on the anhydrous form, wherein Me is an alkali metal, characterized in that said alkali metal aluminosilicate is present in combination with at least one isocyanuric acid derivative of the formula

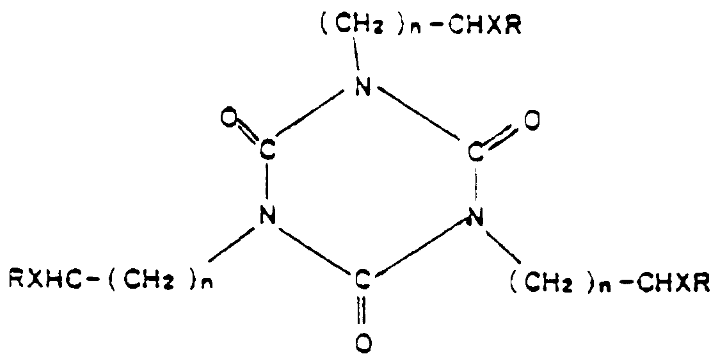

I

wherein
each n is an integer from 0 to 5, preferably from 0 to 3, each X is H or a straight-chain or branched alkyl group containing 1 to 6 carbon atoms, preferably 1 to 2 carbon atoms, and each R is -OH or -COOH, and wherein each n, X and/or R preferably has the same meaning.

2. The processing additive according to claim 1, wherein alkali metal aluminosilicate is present in combination with an isocyanuric acid derivative of formula I, wherein each X is H.

3. The processing additive according to any of claim 1 or claim 2, wherein tris-(2-hydroxyethyl)-isocyanurate or tris-(2-carboxyethyl)-isocyanurate is employed as the isocyanuric acid derivative.

4. The processing additive according to any one of claims 1 to 3, wherein alkali metal aluminosilicate and isocyanuric acid derivative are used together with at least one conventional primary stabilizer based on a metal soap, in particular compounds of Ba, Ca, Mg and/or Zn, wherein barium may also be present as alkyl phenolate.

5. The processing additive according to any one of claims 1 to 4, wherein alkali metal aluminosilicate and isocyanuricacid derivative are used together with conventional lubricants.

6. The processing additive according to any of claims 1 to 5, wherein alkali metal aluminosilicate and isocyanuric acid derivative are used together with epoxidized soybean oil.

7. The processing additive according to any of claims 1 to 6, wherein alkali metal aluminosilicate and isocyanuric acid derivative are used together with a sterically hindered phenol.

8. Stabilized halogen-containing polymers, in particular PVC, comprising a processing additive according to any one of claims 1 to 7.

9. Polymers according to claim 8, comprising 0.2 to 5 percent by weight of alkali metal aluminosilicate based on the polymer.

10. Polymers according to claim 8 or claim 9, comprising 0.1 to 5 percent by weight of isocyanuric acid derivative based on the polymer.

## Revendications

**1.** Additif pour traiter des polymères halogénés, en particulier CPV, ayant un silicate alumineux de métal alkalin à particules fins, synthétique, cristallin et contenant 13 à 25 pourcent en poids d'eau liée qui - basé sur la forme anhydride - a une composition (0,7 à 1,1 $ME_2O$).$Al_2O_3$x(1,3 à 2,4 $SiO_2$), Me étant un métal alkalin, caractérisé en ce que le silicate alumineux de métal alkalin est présent, en combinaison avec au moins un dérivé d'acide isocyanurique de la formule

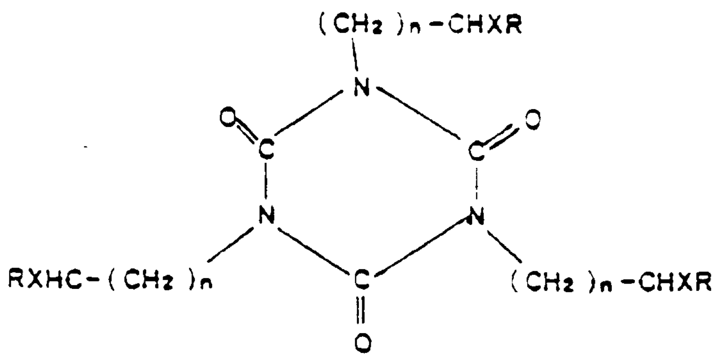

I

chaque n étant un entier de 0 à 5, de préférence de 0 à 3, chaque X étant H ou un groupe alkyle linéaire ou ramifié ayant de 1 à 6 atomes de carbon, de préférence de 1 à 2 atomes de carbon, et chaque R étant -OH ou -COOH, et n, X et/ou R ayant de préférence la même signification.

**2.** Additif de traitement selon la revendication 1, caractérisé en ce que le silicate alumineux de métal alkalin est présent en combinaison avec un dérivé d'acide isocyanurique de la formule I, dans laquelle chaque X est H.

**3.** Additif de traitement selon la revendication 1 ou 2, caractérisé en ce que tris-(2-hydroxyéthyl)-isocyanurate ou tris-(2-carboxyéthyl)-isocyanurate sert de dérivé d'acide isocyanurique.

**4.** Additif de traitement selon une des revendications 1 à 3, caractérisé en ce que le silicate alumineux de métal alkalin et le dérivé d'acide isocyanurique sont utilisés en combinaison avec au moins un stabilisant primaire basé sur un savon métallique, en particulier des composés de Ba, Ca, Mg et/ou Zn, le barium pouvant être présent comme alkylphénate.

**5.** Additif de traitement selon une des revendications 1 à 4, caractérisé en ce que le silicate alumineux de métal alkalin et le dérivé d'acide isocyanurique sont utilisés en combinaison avec des lubrifiants conventionels.

**6.** Additif de traitement selon une des revendications 1 à 5, caractérisé en ce que le silicate alumineux de métal alkalin et le dérivé d'acide isocyanurique sont utilisés en combinaison avec de l'huile de soja epoxifiée.

**7.** Additif de traitement selon une des revendications 1 à 6, caractérisé en ce que le silicate alumineux de métal alkalin et le dérivé d'acide isocyanurique sont utilisés en combinaison avec un phénol à empêchement stérique.

**8.** Polymères halogénés et stabilisés, en particulier CPV, comprenant un additif de traitement selon une des revendications 1 à 7.

**9.** Polymères selon la revendication 8, comprenant de 0,2 à 5 pourcent en poids de silicate alumineux de métal alkalin basé sur le polymère.

**10.** Polymères selon la revendication 8 ou 9, comprenant de 0,1 à 5 pourcent en poids de dérivé d'acide isocyanurique basé sur le polymère.